(19) Europäisches Patentamt
European Patent Office
Office européen des brevets

(11) **EP 2 631 724 B1**

(12) **EUROPEAN PATENT SPECIFICATION**

(45) Date of publication and mention
of the grant of the patent:
**28.02.2018 Bulletin 2018/09**

(51) Int Cl.:
**G05B 23/00** *(2006.01)*    **G06F 19/00** *(2018.01)*
**G05B 23/02** *(2006.01)*    *G06F 17/00* *(2006.01)*

(21) Application number: **12830361.7**

(22) Date of filing: **23.05.2012**

(86) International application number:
**PCT/KR2012/004059**

(87) International publication number:
**WO 2013/035964 (14.03.2013 Gazette 2013/11)**

(54) **METHOD FOR MEASURING HEALTH INDEX OF PLANT IN WHICH STATE OF LOWER COMPONENT IS REFLECTED, AND COMPUTER-READABLE STORAGE MEDIUM IN WHICH PROGRAM FOR PERFORMING THE METHOD IS STORED**

VERFAHREN ZUR MESSUNG DES GESUNDHEITSINDEX VON ANLAGEN MIT REFLEXION DES STATUS VON UNTERBAUGRUPPEN UND COMPUTERLESBARES SPEICHERMEDIUM MIT DARAUF GESPEICHERTEM PROGRAMM ZUR AUSFÜHRUNG DIESES VERFAHRENS

PROCÉDÉ DE MESURE D'UN INDICE D'INTEGRITÉ D'UNE INSTALLATION REFLÉTANT L'ÉTAT D'UN ÉLÉMENT INFÉRIEUR, ET SUPPORT D'INFORMATIONS LISIBLE PAR UN ORDINATEUR QUI CONTIENT UN PROGRAMME PERMETTANT DE METTRE EN OEUVRE LE PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2011 KR 20110092080**

(43) Date of publication of application:
**28.08.2013 Bulletin 2013/35**

(73) Proprietor: **BNF Technology Inc.**
**Daejeon 305-500 (KR)**

(72) Inventor: **SEO, Ho Joon**
**Daejeon 305-733 (KR)**

(74) Representative: **Lavoix**
**Bayerstrasse 83**
**80335 München (DE)**

(56) References cited:
**EP-A1- 1 542 148**      **WO-A1-2004/038525**
**WO-A2-2009/028875**    **JP-A- 2002 073 155**
**KR-A- 20040 004 664**   **KR-A- 20090 021 697**
**US-A1- 2010 241 246**

**Description**

Technical Field

The present invention relates to a method of measuring a health index of a plant in which a condition of a lower level component is reflected and a computer-readable storage medium in which a program to perform the method is stored and, more particularly, to a method of measuring a health index of a plant in which a condition of a lower level component is reflected and a computer-readable storage medium in which a program to perform the method is stored, which the condition of the plant is more easily and conveniently monitored based on only the health index of the uppermost level layer, in a case in which an actual measurement value of a certain component of a certain lower level layer deviates from normal range, the actual measurement value is reflected in the health index, and, in a case in which a trip possibility of the plant due to change of an actual measurement value of a specific component is low although the actual measurement value of the component temporarily deviates from a normal range, the actual measurement value of the component has a minimal influence on the health index, and a computer-readable storage medium in which a program to perform the method is stored.

Background Art

WO 2009/028875 A2 discloses a method and an apparatus for supervising the integrated trip margin of an industrial plant facility. The apparatus includes a measurement operation value collection means for collecting a measurement operation value of a facility having a trip setting value inside the industrial plant; a trip margin calculation means for receiving the measurement operation value from the measurement operation value collection means and calculating a trip margin; and a display means for displaying a trip margin having a smallest value among trip margins of respective groups on a screen when there is a plurality of groups of objects of interest, the trip margin of which is to be supervised.; When supervising the trip margin of a facility within a plant, which has a trip setting value, information regarding a trip-related signal having the highest possibility of trip occurrence and the movement of the overall trip-related signals are grouped and displayed on the screen so that relevant people can supervise them more easily.

EP 1 542 148 A1 discloses a method of monitoring and assessing production processes is described that is target value based using a quality index.

A plant is configured to have a tree structure including components and lower level components constituting the components. The plant may be disposed at the uppermost level layer of the tree structure of the plant and a component, such as a boiler or a turbine, may be disposed at a layer under the uppermost level layer of the tree structure of the plant. When the tree structure of the plant is formed, the uppermost level layer of the tree structure of the plant may be selected as needed by a user.

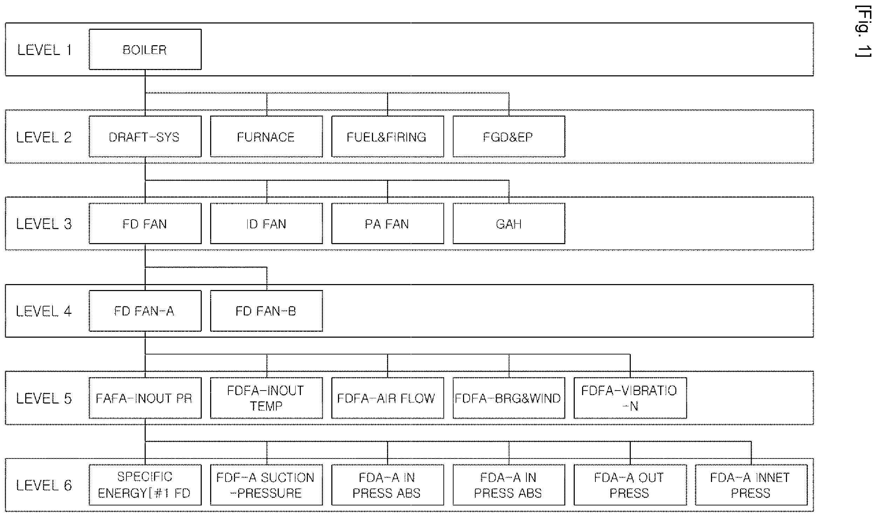

For example, as shown in FIG. 1, a boiler (BOILER) and a turbine (TURBINE) may be disposed at the uppermost level layer constituting the plant (LEVEL 1). A lower level layer of the boiler comprises of a draft system (DRAF-SYS), a furnace system (FURNACE), a fuel system (FUEL & FIRING), and a desulfurization system (FGD & EP), etc. (LEVEL 2). And a lower level layer of the draft system (DRAF-SYS) comprises of a forced draft fan (FD FAN), an induced draft fan (ID FAN), a primary air fan (PA FAN), and GAH (LEVEL 3). The forced draft fan (FD FAN) comprises of a forced draft fan A (FD FAN-A) and a forced draft fan B (FD FAN-B) (LEVEL 4), and a lower level layer of the forced draft fan A (FD FAN-A) comprises of primary air fan pressure (FDFA-INOUT PR), forced draft fan temperature (FDFA-INOUT TEMP), forced draft fan air flow (FDFA-AIR FLOW), a forced draft fan bearing (FDFA-BRG&WIND), and forced draft fan vibration (FDFA-VIBRATION) (LEVEL 5). In addition, a lower level layer of the primary air fan pressure (FDFA-INOUT PR) comprises of SPECIFIC ENERGY #1 FD, FDF-A SUCTION-PRESSURE, FDF-A IN PRESS ABS, FDF-A IN PRESS ABS, FDF-A OUT PRESS, and FDF-A INNET PRESS.

Generally, to measure the health index of the boiler (BOILER) which is the uppermost level layer, an actual measurement value of the lowermost level component is measured and then the health index of the next upper level layer is calculated without correction of the actual measurement value of the lowermost level component. These processes are repeated to calculate the health index of the uppermost level layer.

This method, however, ultimately calculates a health index of the uppermost level layer as a normal value, although an actual measurement value of at least one component of the lowermost level layer or an actual measurement value of at least one component of the upper level layer deviates from a normal value, because their severity or importance comes to be lowered while the value of health index is transmitted to an upper level layer. In other words, the reliability of a conventional health index calculation method is low, because it has a disadvantage in that the health index is distorted.

And the distorted index may result in missing the timing of repair, inspection, and replacement of the component having abnormal value, and as a consequence, the operation of entire plant may come to a halt (trip) which may lead to serious damage.

In order to prevent the occurrence of the above problem, it is necessary to determine whether actual operating measurement values of components of the lowermost level layer as well as the components of upper level layers constituting the plane are within a normal range in real time.

In addition, while there may be the case when some of actual measurement values of components of lower level layers, a normal value of the uppermost level layer may not be affected by them, although they deviate from normal values temporarily, and vice versa.

Consequently, there has been a high necessity for developing a method of monitoring a health index of all components constituting a tree of an upper level layer using only a health index of the upper level layer without monitoring as to whether an actual measurement value of the lower level layer is within a normal range.

Disclosure

Technical Problem

Therefore, the present invention has been made to solve the above conventional problems, and it is an object of the present invention to provide a method of measuring a health index of a plant in which a condition of a lower level component is reflected and a computer-readable storage medium in which a program to perform the method is stored, wherein a status of the plant is more easily and conveniently monitored only with a health index of the uppermost level layer.

It is another object of the present invention to provide a method of measuring a health index of a plant in which a condition of a lower level component is reflected and a computer-readable storage medium in which a program to perform the method is stored, wherein the above actual measurement value is reflected in the health index, in a case in which an actual measurement value of a certain component of a certain lower level layer deviates from a normal range.

And it is a further object of the present invention to provide a method of measuring a health index of a plant in which a condition of a lower level component is reflected and a computer-readable storage medium in which a program to perform the method is stored, wherein the actual measurement value of the above component has a minimal influence on the health index, in a case in which the possibility of plant trip is less if the measured value of a specific component changes, even if the actual value deviates from normal range temporarily.

Technical Solution

In accordance with feature of the present invention to accomplish the above objects , the present invention relates to a method of measuring a health index of a plant in which a condition of a lower level component is reflected according to claim 1.

The dependent claims set out particular embodiments of the invention. In addition, the desired tag index at the second step can be calculated by multiplying the tag index by a weight applied to each component as per their importance and the above weight can be calculated by indexing a trip possibility due to the relevant component.

Advantageous Effects

According to the method of measuring a health index of a plant in which a condition of a lower level component is reflected and a computer-readable storage medium in which a program to perform the method is stored, in accordance with the present invention, there is an effect of more efficiently controlling and managing a critical factor of a plant trip, According to the method of measuring a health index of a plant in which a condition of a lower level component is reflected and a computer-readable storage medium in which a program to perform the method is stored, in accordance with the present invention, because the condition of the entire plant can be monitored easily and conveniently only by looking at the health index of the topmost level.

In addition, according to the present invention, it has a merit of preventing a trip of the entire plant through control and management of the above component, because the above actual measurement value can be reflected in the health index, in a case in which an actual measurement value of a certain component of a certain lower level layer deviates from a normal value.

Furthermore, according to the present invention, it has an advantage of the differentiated control and management of the plant according to its trip possibility, by making the actual measurement value of the component have a minimal influence on the health index, in a case in which a trip possibility of the plant due to change of the above actual measurement value is low, although a actual measurement value of a specific component deviates temporarily from a normal range.

Description of Drawings

FIG. 1 is a view illustrating an example of a tree structure constituting a plant;

FIG. 2 is a flowchart showing a method of measuring a health index of a plant according to the present invention;

FIG. 3 is a view showing an example illustrating the method of measuring the health index of the plant according to the present invention;

FIG. 4 is a graph illustrating a correction value in the method of measuring the health index of the plant according to the present invention;

FIG. 5 is a view showing another example illustrating the method of measuring the health index of the plant according to the present invention; and

FIG. 6 is a view showing a further example illustrating the method of measuring the health index of the plant according to the present invention.

Best Mode

Below, there will be a description for a method of measuring a health index of a plant in which a condition of a lower level component is reflected and a computer-readable storage medium in which a program to perform the method is stored, according to the present invention.

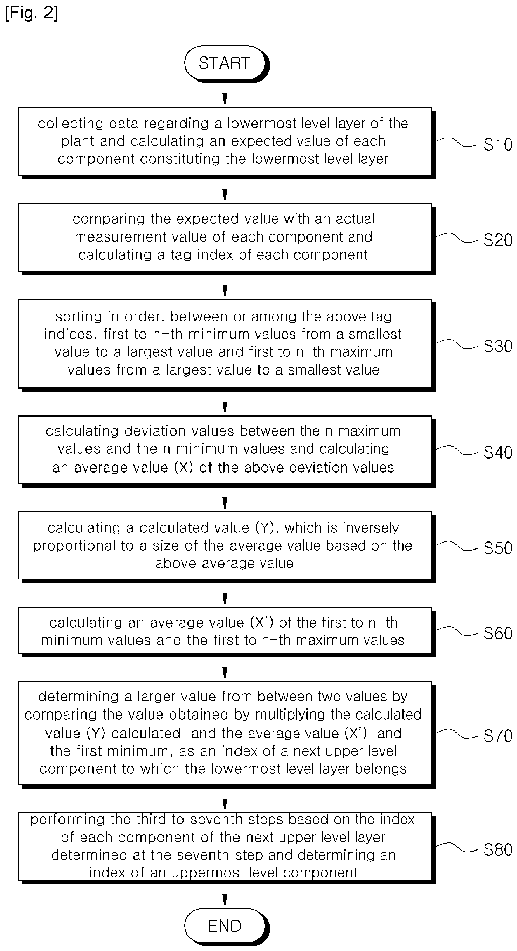

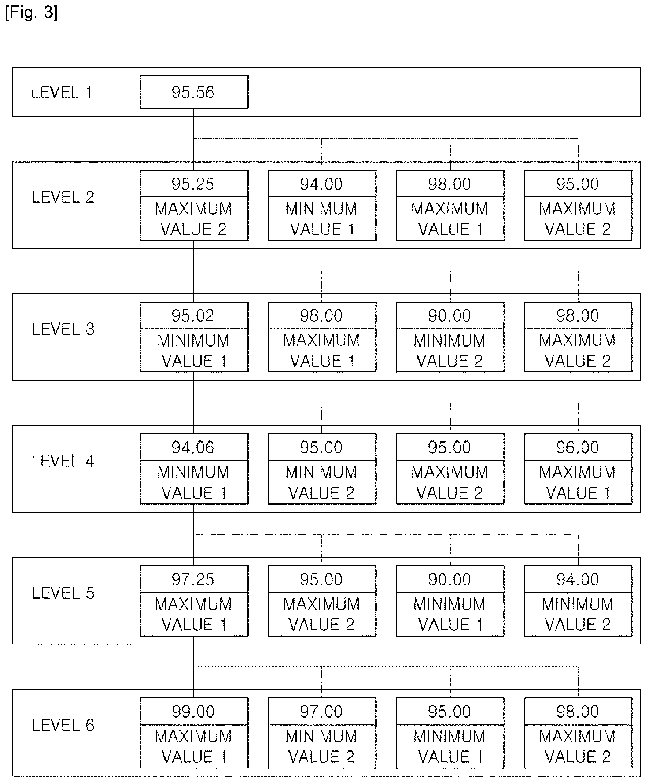

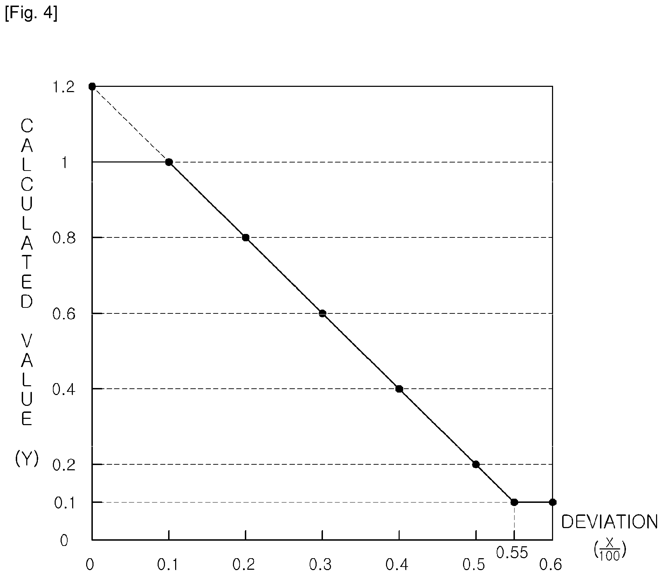

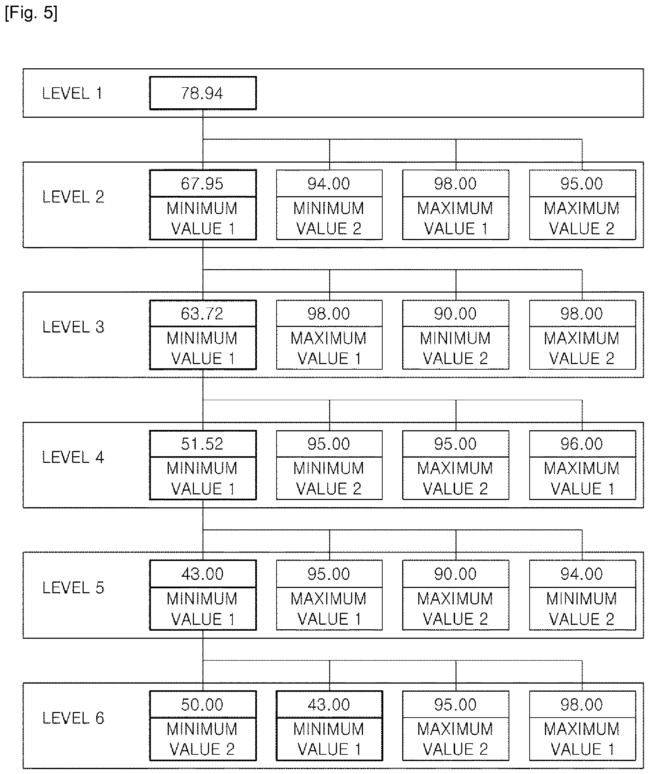

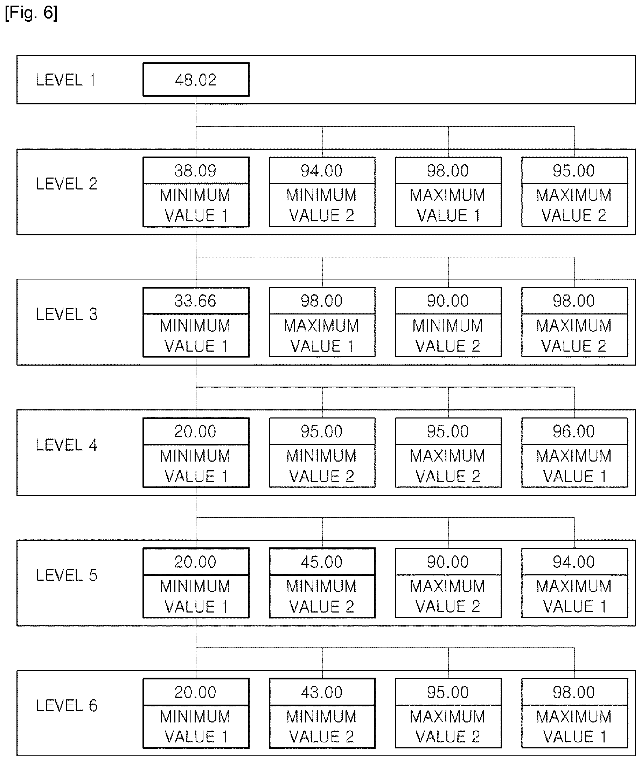

FIG. 2 is a flowchart showing a method of measuring a health index of a plant in which a condition of lower level component is reflected according to the present invention, FIG. 3 is a view showing an example illustrating a method of measuring a health index of a plant in which a condition of a lower level component is reflected according to the present invention, FIG. 4 is a graph illustrating a correction value in the method of measuring the health index of the plant in which a condition of a lower level component is reflected according to the present invention, FIG. 5 is a view showing another example illustrating the method of measuring the health index of the plant in which the condition of a lower level component is reflected according to the present invention, and FIG. 6 is a view showing a further example illustrating a method of measuring the health index of a plant in which a condition of each lower level component is reflected according to the present invention.

According to the present invention, a health index of the uppermost level component or the uppermost level layer is calculated eventually, in a tree structure of components of plant and their lower level components constituting the component, by calculating an index of the lowermost level component, using an expected value and an actual measurement value based on its past data, and calculating indices of upper level components per level located above the lowermost level component, based on the index of the lowermost level component.

Here, a method of calculating an index of the lowermost level layer based on an index of the lowermost level component is referred to as a tag index rule, and a method of calculating an index of each upper level layer above the lowermost level layer is referred to as a group index rule.

First, the tag index rule will be described.

A plant is an apparatus constituting a plurality of systems and devices to achieve a specific purpose. Generally, the plant is configured to have a structure in which at least one measuring instrument to check operation and safety of the plant is installed and the measuring instrument is measured off-line or on-line.

Data regarding an operation history of the plant can be collected and stored through the above measuring instrument. For example, data determined as normal conditions from the operation history of the above plant, specifically data regarding components constituting the lowermost level layer in a tree structure constituting a plurality of systems, are collected and stored.

In this case, components having the most influence on an index of the plant may be selected and disposed at the lowermost level layer.

The data collected and stored as described above may be utilized as materials to estimate that an actual measurement value of each component constituting the lowermost level layer at a current point of time belongs to within what specific range, In this case, which value within the above range is utilized as an expected value may be determined based on characteristics and an operation history of the relevant component. For example, an average value of the above range may be utilized as a expected value at a current point of time (step S10).

Once the expected value is determined, an actual measurement value of the relevant component is received from the measuring instrument and is compared with the expected value to calculate a tag index of the corresponding component.

The tag index may be calculated by [Equation 1] below.

[Equation 1]

$$\text{Tag index} = 100 + A - \left( \frac{|\text{expected value} - \text{actual measurement value}|}{\text{actual measurement value range}} \times B \right)$$

where A indicates a value input to correct a state in which an actual measurement value of a component, the actual measurement value of which is changed at a constant amplitude, temporarily deviates from a normal range.

Value A may be basically set to zero (0), may be corrected by an administrator, and may be corrected per component or in a batch fashion. In a case in which an actual measurement value of a specific component is changed at a constant amplitude, an alarm may be sounded although the actual measurement value of the component is normal when the actual measurement value of the component temporarily deviates from an predicted range. In this case, value A may be increased to increase the estimate range, thereby solving the above problem. For example, a tag index may be lowered to 80 or less when a specific component has the above characteristics. In this case, value A may be set to 10 to correct the tag index such that the tag index is increased to 90.

B indicates a value input to adjust a deviation reflection rate of the expected value and the actual measurement value. As value B is increased, the deviation reflection rate is also increased. As value B is decreased, on the other hand, the deviation reflection rate is also decreased. Value B is generally set to 100.

An example of tag indices of the lowermost level components determined as described above is shown in FIG. 3. That is, the lowermost level layer (LEVEL 6) may include one or more components and a tag index is calculated for each component. Four components shown in FIG. 3 have tag indices of 99.00, 97.00, 95.00, and 98.00, respectively.

In addition, the tag indices may be multiplied by weights applied according to importance of the respective components. The weights are calculated by indexing trip possibilities according to the respective components. For example, a weight of 100 % may be applied to a component having a high trip possibility. On the other hand, a weight of 50 % may be applied to a component having a low trip possibility (step S20).

Once the tag indices are determined, first to n-th minimum values of the tag indices are sorted in order from the smallest value to the largest value. In addition, first to n-th maximum values of the tag indices are sorted in order from the largest value to the smallest value. In a case in which the lowermost level layer includes four or more components, tag indices of the respective components are calculated to extract the minimum value and the maximum value of a set coefficient.

For example, as shown in FIG. 3, the minimum value of the tag indices is set to minimum value 1 and the second minimum value of the tag indices is set to minimum value 2. In addition, the maximum value of the tag indices is set to maximum value 1 and the second maximum value of the tag indices is set to maximum value 2 (step S30).

Subsequently, respective deviation values between the n maximum values and the n minimum values are calculated and then an average value X of the deviation values is calculated. For example, a deviation value between maximum value 1 and minimum value 1, a deviation value between maximum value 1 and minimum value 2, a deviation value between maximum value 2 and minimum value 1, and a deviation value between maximum value 2 and minimum value 2 are calculated. In case of FIG. 3, therefore, a deviation value between maximum value 1 and minimum value 1 is 4.00, a deviation value between maximum value 1 and minimum value 2 is 2.00, a deviation value between maximum value 2 and minimum value 1 is 3.00, and a deviation value between maximum value 2 and minimum value 2 is 1.00.

An average value X of the deviation values is 2.25 (step S40).

Once the average value X is calculated, a calculated value Y, which is inversely proportional to the size of the average value, is calculated. The calculated value Y is provided to compensate an average value X' of the maximum values and the minimum values, which will be calculated below, based on the size of the average value X of the deviation values. If the average value X is large, which means that the deviation between the maximum value and the minimum value is large, the calculated value Y is decreased. On the other hand, if the average value X is small, which means that the deviation between the maximum value and the minimum value is small, the calculated value Y is increased.

As described above, the calculated value Y based on the average value X may be calculated using various methods. In this embodiment, a method defined by Equation 2 may be used.

[Equation 2]

$$Y = 1.2 - 2\left(\frac{X}{100}\right), 0.1 \leq Y \leq 1$$

A graph of the deviation X/100 and the calculated value Y is shown in FIG. 4.

As can be seen from [Equation 2] and FIG. 4, the calculated value Y has a value between 0 and 1. However, zero (0) has no numerical meaning. According to the present invention, therefore, the calculated value Y has a value of 0.1 or more. Consequently, if the deviation X/100 is 0.1 or less, the calculated value Y is set to 1. On the other hand, if the deviation X/100 is 0.55 or more, the calculated value Y is set to 0.1.

In FIG. 3, the average value X of the deviation values is 2.25. When the value is substituted into [Equation 2], therefore, the calculated value Y is set to 1. The actually calculated value is 1.115 but the calculated value Y is 1 or less.

Consequently, the final calculated value is set to 1 (step S50).

Meanwhile, the average value X' of the first to n-th minimum values and the first to n-th maximum values is calculated. In this embodiment, an average value X' of minimum value 1, minimum value 2, maximum value 1, and maximum value 2. The average value X' is 97.25 (step S60).

Once the calculated value and the average value X' are determined, a larger value selected from between a value obtained by multiplying the calculated value and the average value X' and the first minimum value is determined as an index of the next upper level component to which the lowermost level layer belongs.

In this embodiment, the calculated value Y is 1 and the average value X' is 97.25. Consequently, a value obtained by multiplying the calculated value and the average value X' is 97.25, which is greater that minimum value 1 (95.00). As a result, the average value X' of 97.25 is determined as an index of the next upper level component (step S70).

Hereinafter, the group index rule will be described.

The group index rule is basically identical to the tag index rule. That is, an index of the next upper level component of each component is calculated based on an index of the component in the same manner as in the tag index rule.

However, the group index rule is different from the tag index rule in that an index of each component is calculated based on lower level components in the group index rule although an index of each component is calculated based on an expected value and an actual measurement value in the tag index rule.

FIG. 3 shows that an index of each layer is calculated using the above-mentioned method and, finally, an index of the uppermost level component (LEVEL 1) is determined to 95.56. The index of the uppermost level component (LEVEL 1) is used as a health index of each layer of the tree structure shown in FIG. 3 (step S80).

Hereinafter, a health index calculation method in a case in which indices of some lowermost level components are lowered will be described with reference to FIG. 5.

As shown in FIG. 5, two components of the lowermost level layer have indices of 50.00 and 43.00, which are very small. Consequently, the index of 43.00 is determined as minimum value 1 and the index of 50.00 is determined as minimum value 2. In addition, maximum value 1 is 98.00 and maximum value 2 is 95.00.

An average value X of deviation values between the four values is 50.00. A calculated value Y is calculated using [Equation 2]. The calculated value Y is 0.20.

An average value X' of minimum value 1, minimum value 2, maximum value 1, and maximum value 2 is calculated. The calculated average value X' is 71.50. The product of the calculated value Y and the average value X' is 14.3, which is less than the minimum value 1 (43.00). Consequently, an index of a component of the next upper level layer (LEVEL 5) is determined to the minimum value 1, i.e. 43.00.

In the same manner as described above, indices of components of the layers (LEVEL 4 to LEVEL 1) are sequentially calculated. The calculated indices are 51.52, 63.72, 67.95, and 78.94.

In the tree structure shown in FIG. 5, two components of the lowermost level layer (LEVEL 6) have excessively small indices. Although indices of upper level layers are gradually increased as the indices of the upper level layers are calculated, a health index of the uppermost level layer is considerably low. Consequently, it is possible to detect that the indices of the components of the lower level layers have been excessively lowered through monitoring of the health index.

Hereinafter, a description will be given of how two components of the lowermost level layer (LEVEL 6) and one component of the next upper level having too small indices are reflected in a health index with reference to FIG. 6.

As shown in FIG. 6, indices of the lowermost level layer (LEVEL 6) are 20.00, 43.00, 95.00, and 98.00. In addition, minimum value 1 is 20.00, minimum value 2 is 43.00, maximum value 1 is 98.00, and maximum value 2 is 95.00.

An index of a component of the next upper level layer based on the above indices is calculated in the same manner as described above. The calculated index is 20.00. On the other hand, another component of the next upper level layer (LEVEL 5) has an excessively small index of 45.00.

In this state, indices of the next upper level layers (LEVEL 4 to LEVEL 1) are sequentially calculated based on the index of the layer (LEVEL 5). The calculated indices are 20.00, 33.66, 38.09, and 48.02. As a result, it can be seen that the index, i.e. the health index, of the uppermost level layer is 48.02, which is too small.

Consequently, it is possible for an administrator to detect that the indices of the components of the lower level layers are excessively lowered through monitoring of the health index of the tree structure shown in FIG. 6.

Although the preferred embodiments of the present invention have been disclosed for illustrative purposes, those skilled in the art will appreciate that various modifications, additions and substitutions are possible, without departing from the scope as disclosed in the accompanying claims.

## Claims

1. A method of measuring a health index of a plant in which a condition of a lower level component is reflected, the method comprising:

a first step of collecting data (S10) regarding a first level layer of the plant and calculating an expected value of each component constituting the first level layer;

a second step of comparing (S20) the expected value with an actual measurement value of each component and calculating a tag index of each component, **characterized in that** the tag index calculated at the second step has a feature of being calculated by multiplying the tag index by a weight; the method further comprising:

a third step of calculating (S40) deviation values of the above tag indices and calculating an average value (X) of the above deviation values;

a fourth step of calculating (S50) a calculated value (Y), which is based on the above average value;

a fifth step of calculating (S60) an average value (X') of the tag index;

a sixth step of determining an index of a next upper level component to which the first level layer belongs from the calculated value (Y) and the average value (X').

2. The method according to claim 1, a method of measuring a health index of a plant in which a condition of a lower level component is reflected wherein the tag index calculated at the second step has a feature of being calculated by the following equation including value A input to modify a condition in which an actual measurement value of a component, the actual measurement value of which is changed at a constant amplitude, temporarily deviates from a normal range and value B input to adjust a deviation reflection rate between the expected value and the actual measurement value.

$$\text{Tag index} = 100 + A - \left(\frac{|\text{expected value} - \text{actual measurement value}|}{\text{actual measurement value range}} \times B\right)$$

3. The method according to claim 1, a method of measuring a health index of a plant in which a condition of a lower level component is reflected wherein the calculated value (Y) calculated at the fourth step has a feature of being calculated by the following equation: if the average deviation value (X) is 10 or less, the calculated value Y is set to 1, if the average deviation value (X) is 55 or more, the calculated value Y is set to 0.1, and for the other average deviation values Y=1.2-2(X/100), wherein X is the average deviation value and Y is the calculated value

4. The method according to claim 1, a method of measuring a health index of a plant in which a condition of a lower level component is reflected wherein the above weight has a feature of being calculated by indexing a trip possibility according to each component.

5. A computer-readable storage medium in which a program to perform a method according to any one of claims 1 to 5 is stored.

**Patentansprüche**

1. Verfahren zur Messung eines Gesundheitsindexes einer Anlage, in dem ein Zustand einer Komponente einer niedrigeren Ebene widergespiegelt wird, wobei das Verfahren umfasst:

einen ersten Schritt des Sammelns von Daten (S10) bezüglich einer Schicht einer ersten Ebene der Anlage und Berechnen eines erwarteten Wertes jeder Komponente, welche die Schicht der ersten Ebene bildet;

einen zweiten Schritt des Vergleichens (S20) des erwarteten Wertes mit einem tatsächlichen Messwert jeder Komponente und Berechnen eines Tag-Indexes jeder Komponente, **dadurch gekennzeichnet, dass** der im zweiten Schritt berechnete Tag-Index ein Merkmal des Berechnetwerdens durch Multiplizieren des Tag-Indexes mit einem Gewicht aufweist; wobei das Verfahren ferner umfasst:

einen dritten Schritt des Berechnens (S40) von Abweichungswerten des zuvor erwähnten Tag-Indexes und Berechnen eines Mittelwerts (X) der zuvor erwähnten Abweichungswerte;

einen vierten Schritt des Berechnens (S50) eines berechneten Wertes (Y), der auf dem zuvor erwähnten Mittelwert basiert;

einen fünften Schritt des Berechnens (S60) eines Mittelwerts (X') des Tag-Indexes;

einen sechsten Schritt des Bestimmens eines Indexes einer Komponente einer nächsthöheren Ebene, zu der die Schicht der ersten Ebene gehört, aus dem berechneten Wert (Y) und dem Mittelwert (X').

**2.** Verfahren nach Anspruch 1, Verfahren zur Messung eines Gesundheitsindexes einer Anlage, in dem ein Zustand einer Komponente einer niedrigeren Ebene widergespiegelt wird, wobei der im zweiten Schritt berechnete Tag-Index ein Merkmal des Berechnetwerdens durch die folgende Gleichung aufweist, umfassend einen Wert A, der eingegeben wird, um einen Zustand zu modifizieren, in dem ein tatsächlicher Messwert einer Komponente, deren tatsächlicher Messwert bei einer konstanten Amplitude geändert wird, vorübergehend von einem normalen Bereich abweicht, und einen Wert B, der eingegeben wird, um eine Abweichungsreflexionsrate zwischen dem erwarteten Wert und dem tatsächlichen Messwert anzupassen.

$$\text{Tag-Index} = 100 + A - \left( \frac{|erwarteter\ Wert - tatsächlicher\ Messwert|}{tatsächlicher\ Messwertebereich} \ x\ B \right)$$

**3.** Verfahren nach Anspruch 1, Verfahren zur Messung eines Gesundheitsindexes einer Anlage, in dem ein Zustand einer Komponente einer niedrigeren Ebene widergespiegelt wird, wobei der berechnete Wert (Y), der im vierten Schritt berechnet wird, ein Merkmal des Berechnetwerdens durch die folgende Gleichung aufweist: wenn der mittlere Abweichungswert (X) 10 oder kleiner ist, dann wird der berechnete Wert Y auf 1 gesetzt, wenn der mittlere Abweichungswert (X) 55 oder größer ist, dann wird der berechnete Wert Y auf 0,1 gesetzt, und für die anderen mittleren Abweichungswerte Y = 1,2 - 2(X/100), wobei X der mittlere Abweichungswert ist, und Y der berechnete Wert ist.

**4.** Verfahren nach Anspruch 1, Verfahren zur Messung eines Gesundheitsindexes einer Anlage, in dem ein Zustand einer Komponente einer niedrigeren Ebene widergespiegelt wird, wobei das zuvor erwähnte Gewicht ein Merkmal des Berechnetwerdens durch Indexieren einer Fehlermöglichkeit gemäß jeder Komponente aufweist.

**5.** Computerlesbares Speichermedium, in dem ein Programm zum Durchführen eines Verfahrens nach einem der Ansprüche 1 bis 5 gespeichert ist.

**Revendications**

**1.** Procédé de mesure d'un indice d'intégrité d'une installation dans lequel est indiqué un état d'un composant de niveau inférieur, le procédé comprenant :

une première étape consistant à collecter des données (S10) concernant une couche de premier niveau de l'installation et à calculer une valeur prévue de chaque composant constituant la couche de premier niveau ;
une deuxième étape consistant à comparer (S20) la valeur prévue avec une valeur de mesure réelle de chaque composant et à calculer un indice balise de chaque composant, **caractérisé en ce que** l'indice balise calculé à la deuxième étape présente la caractéristique d'être calculé par multiplication de l'indice balise par une pondération ; le procédé comprenant en outre :

une troisième étape consistant à calculer (S40) des valeurs d'écart des indices balise précités et à calculer une valeur moyenne (X) des valeurs d'écart précitées ;
une quatrième étape consistant à calculer (S50) une valeur calculée (Y), qui est basée sur la valeur moyenne précitée ;
une cinquième étape consistant à calculer (S60) une valeur moyenne (X') de l'indice balise ;
une sixième étape consistant à déterminer un indice d'un composant d'un niveau supérieur suivant auquel appartient la couche de premier niveau à partir de la valeur calculée (Y) et de la valeur moyenne (X').

**2.** Procédé selon la revendication 1, un procédé de mesure d'un indice d'intégrité d'une installation dans lequel est indiqué un état d'un composant de niveau inférieur dans lequel l'indice balise calculé à la deuxième étape présente la caractéristique d'être calculé par l'équation suivante comprenant une valeur A entrée pour modifier une condition dans laquelle une valeur de mesure réelle d'un composant, dont la valeur de mesure réelle est modifiée à une amplitude constante, s'écarte provisoirement d'une plage normale et une valeur B entrée pour ajuster un taux d'indication d'écart entre la valeur prévue et la valeur de mesure réelle.

$$Indice\ balise = 100 + A\left( \frac{|valeur\ prévue - valeur\ de\ mesure\ réelle|}{plage\ de\ valeurs\ de\ mesure\ réelles} \times B \right).$$

3. Procédé selon la revendication 1, procédé de mesure d'un indice d'intégrité d'une installation dans lequel est indiqué un état d'un composant de niveau inférieur dans lequel la valeur calculée (Y) calculée à la quatrième étape de calcul présente la caractéristique d'être calculée par l'équation suivante : si la valeur d'écart moyenne (X) est inférieure ou égale à 10, la valeur calculée Y est mise à 1, si la valeur d'écart moyenne (X) est supérieure ou égale à 55, la valeur calculée Y est mise à 0,1 et pour les autres valeurs d'écart moyennes Y=1,2 - 2(X/100), dans lequel X est la valeur d'écart moyenne et Y est la valeur calculée.

4. Procédé selon la revendication 1, procédé de mesure d'un indice d'intégrité d'une installation dans lequel est indiqué un état d'un composant de niveau inférieur dans lequel la pondération précitée présente la caractéristique d'être calculée par indexage d'une possibilité d'arrêt en fonction de chaque composant.

5. Support lisible par ordinateur dans lequel est stocké un programme permettant d'exécuter un procédé selon l'une quelconque des revendications 1 à 5.

[Fig. 1]

EP 2 631 724 B1

[Fig. 2]

START

collecting data regarding a lowermost level layer of the plant and calculating an expected value of each component constituting the lowermost level layer — S10

comparing the expected value with an actual measurement value of each component and calculating a tag index of each component — S20

sorting in order, between or among the above tag indices, first to n-th minimum values from a smallest value to a largest value and first to n-th maximum values from a largest value to a smallest value — S30

calculating deviation values between the n maximum values and the n minimum values and calculating an average value (X) of the above deviation values — S40

calculating a calculated value (Y), which is inversely proportional to a size of the average value based on the above average value — S50

calculating an average value (X') of the first to n-th minimum values and the first to n-th maximum values — S60

determining a larger value from between two values by comparing the value obtained by multiplying the calculated value (Y) calculated and the average value (X') and the first minimum, as an index of a next upper level component to which the lowermost level layer belongs — S70

performing the third to seventh steps based on the index of each component of the next upper level layer determined at the seventh step and determining an index of an uppermost level component — S80

END

[Fig. 3]

| LEVEL 1 | 95.56 | | | |
|---|---|---|---|---|

| LEVEL 2 | 95.25 MAXIMUM VALUE 2 | 94.00 MINIMUM VALUE 1 | 98.00 MAXIMUM VALUE 1 | 95.00 MAXIMUM VALUE 2 |
|---|---|---|---|---|

| LEVEL 3 | 95.02 MINIMUM VALUE 1 | 98.00 MAXIMUM VALUE 1 | 90.00 MINIMUM VALUE 2 | 98.00 MAXIMUM VALUE 2 |
|---|---|---|---|---|

| LEVEL 4 | 94.06 MINIMUM VALUE 1 | 95.00 MINIMUM VALUE 2 | 95.00 MAXIMUM VALUE 2 | 96.00 MAXIMUM VALUE 1 |
|---|---|---|---|---|

| LEVEL 5 | 97.25 MAXIMUM VALUE 1 | 95.00 MAXIMUM VALUE 2 | 90.00 MINIMUM VALUE 1 | 94.00 MINIMUM VALUE 2 |
|---|---|---|---|---|

| LEVEL 6 | 99.00 MAXIMUM VALUE 1 | 97.00 MINIMUM VALUE 2 | 95.00 MINIMUM VALUE 1 | 98.00 MAXIMUM VALUE 2 |
|---|---|---|---|---|

[Fig. 4]

[Fig. 5]

| LEVEL 1 | 78.94 | | | |
|---|---|---|---|---|

| LEVEL 2 | 67.95<br>MINIMUM<br>VALUE 1 | 94.00<br>MINIMUM<br>VALUE 2 | 98.00<br>MAXIMUM<br>VALUE 1 | 95.00<br>MAXIMUM<br>VALUE 2 |
|---|---|---|---|---|

| LEVEL 3 | 63.72<br>MINIMUM<br>VALUE 1 | 98.00<br>MAXIMUM<br>VALUE 1 | 90.00<br>MINIMUM<br>VALUE 2 | 98.00<br>MAXIMUM<br>VALUE 2 |
|---|---|---|---|---|

| LEVEL 4 | 51.52<br>MINIMUM<br>VALUE 1 | 95.00<br>MINIMUM<br>VALUE 2 | 95.00<br>MAXIMUM<br>VALUE 2 | 96.00<br>MAXIMUM<br>VALUE 1 |
|---|---|---|---|---|

| LEVEL 5 | 43.00<br>MINIMUM<br>VALUE 1 | 95.00<br>MAXIMUM<br>VALUE 1 | 90.00<br>MAXIMUM<br>VALUE 2 | 94.00<br>MINIMUM<br>VALUE 2 |
|---|---|---|---|---|

| LEVEL 6 | 50.00<br>MINIMUM<br>VALUE 2 | 43.00<br>MINIMUM<br>VALUE 1 | 95.00<br>MAXIMUM<br>VALUE 2 | 98.00<br>MAXIMUM<br>VALUE 1 |
|---|---|---|---|---|

[Fig. 6]

| LEVEL 1 | 48.02 | | | |
|---|---|---|---|---|

| LEVEL 2 | 38.09 MINIMUM VALUE 1 | 94.00 MINIMUM VALUE 2 | 98.00 MAXIMUM VALUE 1 | 95.00 MAXIMUM VALUE 2 |
|---|---|---|---|---|

| LEVEL 3 | 33.66 MINIMUM VALUE 1 | 98.00 MAXIMUM VALUE 1 | 90.00 MINIMUM VALUE 2 | 98.00 MAXIMUM VALUE 2 |
|---|---|---|---|---|

| LEVEL 4 | 20.00 MINIMUM VALUE 1 | 95.00 MINIMUM VALUE 2 | 95.00 MAXIMUM VALUE 2 | 96.00 MAXIMUM VALUE 1 |
|---|---|---|---|---|

| LEVEL 5 | 20.00 MINIMUM VALUE 1 | 45.00 MINIMUM VALUE 2 | 90.00 MAXIMUM VALUE 2 | 94.00 MAXIMUM VALUE 1 |
|---|---|---|---|---|

| LEVEL 6 | 20.00 MINIMUM VALUE 1 | 43.00 MINIMUM VALUE 2 | 95.00 MAXIMUM VALUE 2 | 98.00 MAXIMUM VALUE 1 |
|---|---|---|---|---|

**EP 2 631 724 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2009028875 A2
- EP 1542148 A1